# EUROPÄISCHE PATENTSCHRIFT

(11) **EP 1 246 779 B1**
(45) Veröffentlichungstag und Bekanntmachung des Hinweises auf die Patenterteilung: **23.07.2003**
(21) Anmeldenummer: 00991192.6
(22) Anmeldetag: 14.12.2000
(51) Int. Cl.: C02F 3/04

(54) **VERFAHREN UND VORRICHTUNG ZUM REINIGEN VON ROHWASSER**
METHOD AND DEVICE FOR PURIFYING UNTREATED WATER
PROCEDE ET DISPOSITIF DE PURIFICATION D'EAU BRUTE

(30) Priorität: 23.12.1999 DE 19962791
(43) Veröffentlichungstag der Anmeldung: 09.10.2002
(73) Patentinhaber: STEAG encotec GmbH, 45128 Essen (DE); Kraftwerks- und Netzgesellschaft mbH, 18147 Rostock (DE); DVGW-Forschungsstelle TUHH, 21073 Hamburg (DE)
(72) Erfinder: KEIL, Ulrich, 47807 Krefeld (DE); KUSCH, Harald, 18273 Güstrow (DE); SCHÖNFELDER, Toralf, 18057 Rostock (DE); BENDINGER, Bernd, 21335 Lüneburg (DE); WICHMANN, Knut, 21436 Marschacht (DE)
(86) Internationale Anmeldenummer: EP0012733
(87) Internationale Veröffentlichungsnummer: WO01047816

(56) Entgegenhaltungen:
- EP-A- 0 607 019
- US-A- 3 779 909
- US-A- 5 885 459
- PATENT ABSTRACTS OF JAPAN vol. 017, no. 561 (C-1119), 8. Oktober 1993 (1993-10-08) & JP 05 161896 A (TOSHIBA CORP), 29. Juni 1993 (1993-06-29)

## Beschreibung

Die Erfindung betrifft ein Verfahren sowie eine Vorrichtung zum Reinigen von Rohwasser, welches mit biologisch und adsorptiv entfernbaren Substanzen, vor allem mit gelösten organischen Kohlenstoffverbindungen, belastet ist, insbesondere zum Vorreinigen von chlorfreiem Trinkwasser als Vorstufe zum Erzeugen von vollentsalztem Reinstwasser.

Der Erfindung liegt die Aufgabe zugrunde, eine besonders wirksame und dabei besonders wirtschaftliche Reinigung des Rohwassers zu ermöglichen.

Hierzu schlägt die Erfindung vor,
- daß die Reinigung dreistufig durchgeführt wird,
- daß die stromauf gelegene Reinigungsstufe überwiegend biologisch als Biofilter betrieben wird und die nachfolgenden Reinigungsstufen überwiegend adsorptiv als Adsorber betrieben werden,
- daß der Biofilter durch Rückspülung gereinigt wird, wobei die Rückspülperioden in Abhängigkeit von dem zwischen dem Biofilter und dem stromauf gelegenen Adsorber erfaßten TOC und/oder in Abhängigkeit von der Laufzeit und/oder in Abhängigkeit vom Druckverlust über dem Biofilter eingeleitet werden, und
- daß der stromauf gelegen Adsorber durch Rückspülung gereinigt und sodann im Wechsel mit dem anderen Adsorber in die stromab gelegene Position geschaltet wird.

Biofilter zur Rohwasserreinigung, beispielsweise zum Erzeugen von Trinkwasser, sind bekannt. Auch ist es bekannt, Adsorber zur Wasserreinigung einzusetzen. In beiden Fällen arbeitet man mit Aktivkohle, wie es auch erfindungsgemäß bevorzugt der Fall ist. Die Wirksamkeit der bekannten Verfahren ist jedoch begrenzt. Auch muß die Aktivkohle häufig gewechselt werden, woraus eine erhebliche Kostenbelastung resultiert. Bekannt ist ferner die Verwendung von Mikrofiltern, wobei diese ein Höchstmaß an Wirksamkeit zu erzielen vermögen. Sie eignen sich sogar zur Erzeugung von Ultra-Reinstwasser, wie es zur Chipherstellung benötigt wird. Allerdings sind die Kosten für die Durchführung einer Mikrofiltration extrem hoch.

Das erfindungsgemäß vorgeschlagenen dreistufige Verfahren ist in der Lage, bei vergleichsweise geringem Kostenaufwand ein hohes Maß an Wirksamkeit zu erzielen. Das Verfahren dient vor allem als Vorstufe zur Produktion von Reinstwasser für die industrielle Nutzung. Es handelt sich um einen abgeschlossenen Prozeß, bei dem nur leicht verwertbare Rückstände anfallen. Das Verfahren ist geeignet, TOC-Konzentrationen im aufbereiteten Wasser von < 500ppb zu erreichen.

Das Rohwasser wird derart konditioniert, daß im Biofilter eine hohe biologische Aktivität erreicht wird, die durche eine weitgehend konstante hydraulische Belastung unterstützt wird. Der Biofilter wird durch Erfassung des TOC (TOC steht für Total Organic Carbon) im Filtrat überwacht. Sobald der TOC auf einen vorgegebenen Wert ansteigt, erfolgt eine Rückspülung des Biofilters. Ein Durchbruch von TOC zum stromauf gelegenen Adsorber kann also wirksam verhindert werden. Auch kommt es zu keiner Verblockung des Biofilters. Die Rückspülung reduziert den Feststoffinhalt/Biomasse auf diejenige Mindestmenge, die für die zuverlässige Funktion des Biofilters erforderlich ist. Die Aktivkohle des Biofilters bedarf keines Austausches. Zusätzlich oder alternativ zur TOC-Überwachung kann die Rückspülung des Biofilters auch in Abhängigkeit von der Laufzeit (erfaßt über den Durchsatz) oder in Abhängigkeit vom Druckverlust über dem Biofilter eingeleitet werden.

Auch der nachgeschaltete, stromauf gelegene Adsorber wird rückgespült und dadurch gegen eine frühzeitige Erschöpfung geschützt. Er dient dazu, den im Biofilter auftretenden Schlupf an TOC und Verunreinigungen aufzufangen und zu adsorbieren. Eine biologische Funktion kommt dem stromauf gelegenen Adsorber nur in sehr geringem Umfang zu. Seine Wirksamkeit beruht überwiegend auf seiner Adsorptionsfunktion zur Verringerung des adsorptiv entfernbaren TOC. Durch das Rückspülen wird die Aktivkohle in mechanisch sauberem Zustand gehalten und bleibt lange Zeit wirksam, so daß ein Austausch nur in großen Zeitabständen erforderlich wird. Dies trägt wesentlich zur Wirtschaftlichkeit des erfindungsgemäßen Verfahrens bei.

Der stromab gelegene Adsorber ermöglicht nicht nur eine Optimierung des Reinigungsprozesses, sondern gestattet auch eine nahezu kontinuierliche Aufrechterhaltung höchster Wirksamkeit. Wird nämlich der stromauf gelegene Adsorber gereinigt, so übernimmt der stromab gelegene Adsorber dessen Funktion. Er wird also zum stromauf gelegenen Adsorber, woraufhin der frisch gereinigte Adsorber die stromab gelegene Position einnimmt und jetzt seinerseits den Reinigungsprozeß optimiert. Der Wechsel ermöglicht eine hohe und konstante Adsorptionsleistung und die Nutzung der vollen Adsorptionskapazität beider Adsorber.

Ein bevorzugtes Anwendungsgebiet der Erfindung ist die Vorreinigung bei der Erzeugung von vollentsalztem Reinstwasser, wie es beispielsweise als Prozeßwasser in der Verfahrenstechnik und in der chemischen Industrie Anwendung findet oder auch als Speisewasser für Kesselanlagen. An die Vorreinigung schließt sich eine Entsalzungsstufe an, die als Umkehrosmose oder Ionenaustauscher arbeitet.

Eine der Erfindung zugrundeliegende wesentliche Erkenntnis besteht darin, daß nach der Entchlorung das Wachstum der Mikroorganismen aufgrund des erhöhten Gehaltes an Substrat sprunghaft ansteigt. Ohne die durch die Erfindung ermöglichte wirksame Erniedrigung der Substratkonzentration käme es also zu einer unzulässigen Belastung der nachgeschalteten Entsalzungsanlage durch Verkeimung und Biofouling. Im Biofilter werden die Substratkonzentrationen mineralisiert und in Biomasse oder in andere Substanzen umgewandelt. Diese und nicht assimilierbare Substanzen (TOC-Schlupf) werden in den nachfolgenden Adsorbern adsorbiert.

Durch geeignete Konditionierungsmaßnahmen, vor allem durch Regelung der Temperatur und des Sauerstoffgehaltes wird eine hohe biologische Aktivität im Biofilter aufrechterhalten. Bei relativ langer Kontaktzeit kommt es zu einer Verminderung des überwiegend biologisch entfernbaren TOC. Die nachgeschalteten Adsorber vermindern den adsorptiv entfernbaren TOC.

Der Biofilter kann während des Betriebes aufgebaut werden. Vorteilhafter ist es, einen bereits beimpften Filter einzusetzen.

In Weiterbildung der Erfindung wird vorgeschlagen, daß die Rückspülung des Biofilters mit der Rückspülung des stromauf gelegenen Adsorbers synchronisiert wird. Während der Rückspülung des Biofilters sollte der stromauf gelegene Adsorber einsatzfähig sein, damit er im Zusammenwirken mit dem stromab gelegenen Adsorber kurzfristig die Funktion des Biofilters mitübernehmen kann. Die Zeitsteuerung wird dabei vorzugsweise so getroffen, daß der Positionswechsel der beiden Adsorber stattgefunden hat, kurz bevor die Rückspülung des Biofilters durchgeführt wird.

Ferner kann es vorteilhaft sein, die Rückspülperioden des stromauf gelegenen Adsorbers in Abhängigkeit von dem zwischen diesem und dem stromab gelegenen Adsorber erfaßten TOC einzuleiten. Die Rückspülperioden des stromauf gelegenen Adsorbers und ggf. synchron dazu die Rückspülperioden des Biofilters können also auch in Abhängigkeit von der Belastung des stromauf gelegenen Adsorbers eingeleitet werden. Dadurch wird verhindert, daß es zu einer Überlastung des stromab gelegenen Adsorbers kommt.

Außerdem läßt sich die Zuverlässigkeit des Reinigungsprozesses dadurch erhöhen, daß das Einleiten der Rückspülperioden zusätzlich oder alternativ in Abhängigkeit von dem über dem stromauf gelegenen Adsorber erfaßten Druckverlust erfolgt.

Jede Rückspülperiode umfaßt vorzugsweise eine Absenkung des Wasserstandes im Biofilter bzw. im stromauf gelegenen Adsorber und sodann eine Rückspülung mit Luft und/oder mit Wasser. Nach der Absenkung des Wasserstandes ist es besonders vorteilhaft, die Aktivkohle erst mit Luft aufzulockern, so daß eine anschließende Rückspülung mit Wasser ein besonders hohes Maß an Wirksamkeit entfaltet. Von besonderer Bedeutung ist dies im Hinblick auf den für die Rückspülung erforderlichen Zeitaufwand. Schließlich reduziert sich während der Rückspülung der dreistufige Reinigungsprozeß auf einen zweistufigen Prozeß.

In wesentlicher Weiterbildung der Erfindung wird vorgeschlagen, daß während wasserentnahmefreier Zeiten der Biofilter vom stromauf gelegenen Adsorber getrennt wird und die beiden Adsorber stillgesetzt werden.

Häufig entfällt beispielsweise an Wochenend- und Feiertagen die Notwendigkeit, gereinigtes bzw. vorgereinigtes Wasser zur Verfügung zu stellen. Dabei kann die Anlage nicht stillgesetzt werden, da sonst der Biofilter nachteilig beeinflußt würde. Würde man allerdings während der wasserentnahmefreien Zeiten die Adsorber mit dem Filtrat des Biofilters beaufschlagen, so müßte das zwangsläufig erzeugte gereinigte bzw. vorgereinigte Wasser verworfen werden. Nach Stillsetzen der Adsorber muß lediglich das Filtrat des Biofilters rezirkuliert werden. Von wesentlicher Bedeutung ist, daß die Adsorber während der wasserentnahmefreien Zeiten von jeglicher Belastung durch das Filtrat des Biofilters freibleiben. Dies erhöht die Zeitspanne zwischen den Rückspülperioden des stromauf gelegenen Adsorbers und verlängert die Standzeit der Aktivkohlefüllung beider Adsorber.

Der vom stromauf gelegene Adsorber getrennte Biofilter kann während der wasserentnahmefreien Zeiten vorzugsweise mit vermindertem Durchsatz betrieben werden, da dies für die Aufrechterhaltung der biologischen Aktivitäten ausreicht.

Die Erfindung ermöglicht es also, den TOC-Schlupf durch die gesamte Anlage zu vermindern. Die Gefahr einer Verkeimung nachgeschalteter Anlagenteile wird stark verringert. Gleiches gilt für die Verblockung funktioneller Gruppen der Anionenaustauscherharze der Vollentsalzungsanlage. Die Betriebskosten werden reduziert, und es fallen nur leicht verwertbare Rückstände an.

Die Erfindung schafft ferner eine Vorrichtung zum Durchführen des vorstehend erläuterten Verfahrens, nämlich zum Reinigen von Rohwasser, welches mit biologisch und adsorptiv entfernbaren Substanzen, vor allem mit gelösten organischen Kohlenstoffverbindungen, belastet ist, insbesondere zum Vorreinigen von entchlortem Trinkwasser als Vorstufe zum Erzeugen von vollentsalztem Reinstwasser, wobei diese Vorrichtung folgende Merkmale aufweist:
- eine Zulaufleitung für Rohwasser,
- eine Ablaufleitung für Reinwasser,
- einen Biofilter, dessen Einlaß an die Zulaufleitung für Rohwasser angeschlossen ist,
- einen ersten und einen zweiten Adsorber, deren Einlässe an die Zulaufleitung für Rohwasser und an den Auslaß des Biofilters und deren Auslässe an die Ablaufleitung für Reinwasser anschließbar sind, wobei ferner der Auslaß des ersten Adsorbers an den Einlaß des zweiten Adsorbers und der Auslaß des zweiten Adsorbers an den Einlaß des ersten Adsorbers anschließbar ist,
- eine Zu- sowie eine Ablaufleitung für Rückspülwasser und/oder eine Zuführleitung für Rückspülluft, wobei die Leitungen an den Biofilter sowie an jeden der beiden Adsorber anschließbar sind, und
- eine Steuereinrichtung zum Betätigen der dem Biofilter und jedem der beiden Adsorber zugeordneten Ventile, wobei die Steuereinrichtung mit einer TOC-Meßstelle am Auslaß des Biofilters und/oder mit einer Durchsatz-Meßreinrichtung und/oder mit einer Differenzdruck-Meßeinrichtung für den Biofilter verbunden ist.

Weitere bevorzugte Merkmale ergeben sich aus den Unteransprüchen.

Die Erfindung wird im folgenden anhand eines bevorzugten Ausführungsbeispiels im Zusammenhang mit der beiliegenden Zeichnung näher erläutert. Die Zeichnung zeigt in:

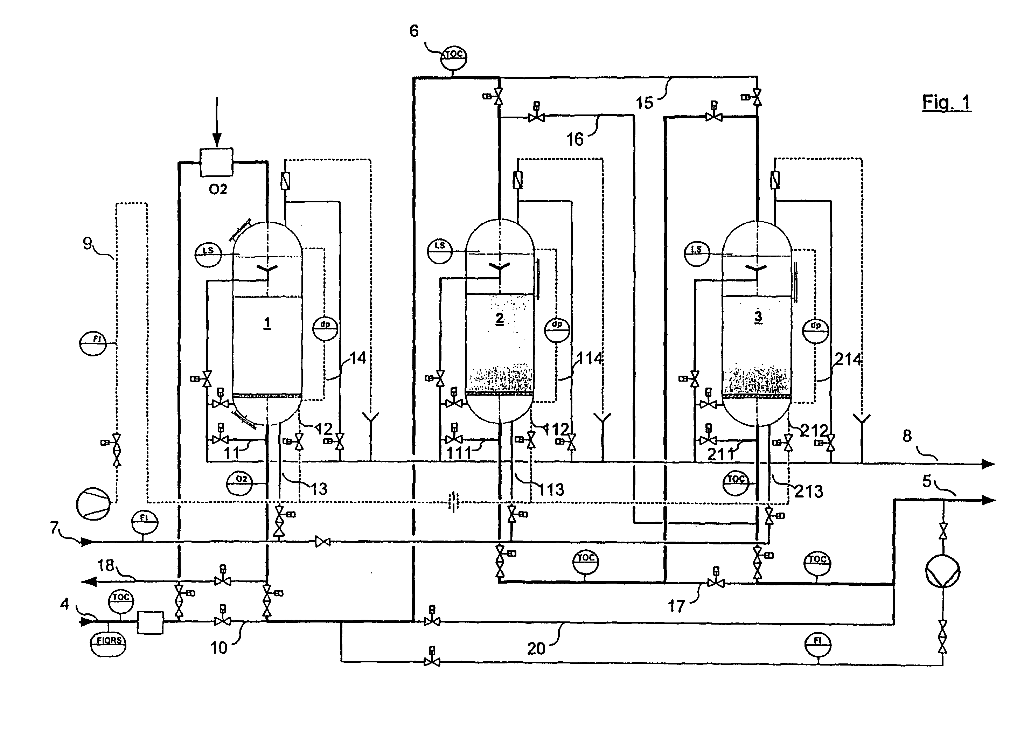

Figur 1 ein Schaltschema einer Vorrichtung zum Reinigen von Rohwasser.

Nach Figur 1 ist ein Biofilter 1 vorgesehen, dem in Reihe zwei Adsorber nachgeschaltet sind, nämlich ein erster Adsorber 2 und ein zweiter Adsorber 3. Der Biofilter 1 ist mit seinem Einlaß an eine Zulaufleitung 4 für Rohwasser angeschlossen, wobei es vorteilhaft ist, in den Einlaß Sauerstoff kontrolliert einzuleiten, um eine Unterversorung der Mikroorganismen mit Sauerstoff zu vermeiden. Ferner ist der zweite Adsorber 3 mit seinem Auslaß an eine Ablaufleitung 5 für Reinwasser angeschlossen. Die Temperatur des Zulaufs des Biofilters wird vorzugsweise überwacht und geregelt.

Das Schema nach Figur 1 zeigt in dick ausgezogenen Linien einen der Wege, die das Wasser von der Zulaufleitung 4 für Rohwasser durch den Biofilter 1 und die beiden Adsorber 2 und 3 zur Ablaufleitung 5 für Reinwasser nehmen kann. Demnach arbeitet der Adsorber 2 als stromauf gelegener Adsorber. Er adsorbiert einen wesentlichen Anteil des aus dem Biofilter 1 überlaufenden TOC. Seine biologische Aktivität ist gering. Im Vordergrund steht seine Adsorptionsleistung.

Der stromab arbeitende Adsorber 3 optimiert den Reinigungsprozeß und übernimmt nach entsprechender Umschaltung die Funktion des stromauf arbeitenden Adsorbers, während der erste Adsorber rückgespült und sodann an die stromab gelegene Position geschaltet wird.

Am Auslaß des Biofilters 1 ist eine TOC-Meßstelle 6 vorgesehen. Sie steht mit einer nicht dargestellten Steuereinrichtung in Verbindung, welche die Vielzahl der der Anlage zugeordneten Ventile betätigt. Sobald die TOC-Meßstelle 6 einen vorgewählten Wert anzeigt, wird der Biofilter 1 auf Rückspülung geschaltet.

Das Rückspülsystem umfaßt eine Zulaufleitung 7 und eine Ablaufleitung 8 für Rückspülwasser sowie eine Zuführleitung 9 für Rückspülluft.

Die Rückspülung des Biofilters 1 wird dadurch eingeleitet, daß man seinen Einlaß und seinen Auslaß absperrt. Ein Leitungsabschnitt 10 dient als Bypass und verbindet den Einlaß des ersten Adsorbers 2 mit der Zulaufleitung 4 für Rohwasser. Als nächstes wird der Wasserstand im Biofilter 1 abgesenkt, und zwar über einen Leitungsabschnitt 11, der seinen Auslaß mit der Ablaufleitung 8 für Rückspülwasser verbindet. Sodann erfolgt eine Auflockerung der Aktivkohle im Biofilter 1. Hierzu wird letzterer über einen Leitungsabschnitt 12 an die Zuführleitung 9 für Rückspülluft angeschlossen. Die Entlüftung kann in die Ablaufleitung 8 für Rückspülwasser erfolgen. Als letzter Schritt schließlich wird der Biofilter 1 über einen Leitungsabschnitt 13 an die Zulaufleitung 7 für Rückspülwasser angeschlossen. Sobald der Reinigungsprozeß beendet ist, wird der ursprüngliche Betrieb wieder aufgenommen.

Als zusätzliche Sicherung verfügt der Biofilter 1 über eine Differenzdruck-Meßeinrichtung 14, die an die Steuereinrichtung angeschlossen ist und dafür sorgt, daß die Rückspülung des Biofilters 1 auch dann gestartet wird, wenn der Druckabfall über den Biofilter ein vorgegebenes Höchstmaß übersteigt.

Die Rückspülung der beiden Adsorber 2 und 3 wird in entsprechender Weise durchgeführt. Die hierzu erforderlichen Bauteile, die mit denen des Biofilters 1 übereinstimmen, tragen für den Adsorber 2 Hunderter-Bezugsziffern und für den Adsorber 3 Zweihunderter-Bezugsziffern.

Die Rückspülung des stromauf gelegenen Adsorbers, nach dem in Figur 1 in dick ausgezogenen Linien dargestellten Schaltschema ist dies der erste Adsorber 2, kann in Synchronisation zur Rückspülung des Biofilters 1 erfolgen, allerdings unter der Voraussetzung, daß sich letzterer in Betrieb befindet. Als erster Schritt wird der Einlaß des Adsorbers 2 geschlossen, wobei gleichzeitig der Einlaß des Adsorbers 3 an den Auslaß des Biofilters 1 angeschlossen wird, und zwar über einen Leitungsabschnitt 15. Der Adsorber 3 übernimmt nun die gesamte Adsorptionsleistung. Der Adsorber 2 wird nach Schließen seines Auslasses in derselben Weise rückgespült, wie es in Verbindung mit dem Biofilter 1 beschrieben wurde.

Nach Beendigung der Rückspülung des Adsorbers 2 wird dieser dem Adsorber 3 nachgeschaltet. Letzterer behält also seine stromauf gelegene Position, während der Adsorber 2 in die stromab gelegene Position gelangt. Hierzu wird die Verbindung zwischen dem Auslaß des Adsorbers 3 und der Ablaufleitung 5 für Reinwasser unterbrochen. Der Auslaß des Adsorbers 3 wird vielmehr an den Einlaß des Adsorbers 2 angeschlossen, und zwar über einen Leitungsabschnitt 16. Der nun wieder geöffnete Auslaß des Adsorbers 2 steht über einen Leitungsabschnitt 17 mit der Ablaufleitung 5 für Reinwasser in Verbindung. Zu gegebener Zeit wird der jetzt an stromauf gelegene Position arbeitende Adsorber 3 in derselben Weise rückgespült, wie es anhand des Biofilters 1 erläutert wurde.

An wasserentnahmefreien Tagen (z.B. Wochenend- und Feiertagen) wird kein Reinwasser benötigt. Man trennt den Auslaß des Biofilters 1 von der Ablaufleitung 5 für Reinwasser und schließt ihn an eine Entsorgungsleitung 18 an. Gleichzeitig wird der Durchsatz des Biofilters 1 vermindert, vorzugsweise auf etwa ein Drittel des normalen Betriebsdurchsatzes.

Für den Notfall, wenn nämlich beide Adsorber 2 und 3 gestört sind, ist eine Bypass-Leitung 20 vorgesehen, die den Auslaß des Biofilters 1 direkt mit der Ablaufleitung 5 für Reinwasser verbindet.

Das Verfahren nach der Erfindung wird vorzugsweise mit konstanter Durchsatzleistung betrieben. Dies führt zu optimalen Kontaktzeiten und zu einem definierten Massentransfer. Es wurde gefunden, daß eine Reduzierung des TOC-Wertes auf ca. 500ppb erzielbar ist. Es handelt sich hierbei um einen mittleren Wert, der nur geringen Schwankungen unterworfen ist. Die Erfindung ermöglicht also sehr lange Standzeiten in Kombination mit einem sehr hohen TOC-Abbau.

Im Rahmen der Erfindung sind durchaus Abwandlungsmöglichkeiten gegeben. So kann auf die gesonderte Entsorgungsleitung 18 für den Biofilter 1 verzichtet werden, wenn eine Möglichkeit vorgesehen wird, den Auslaß des Biofilters 1 an die Ablaufleitung 8 für Rückspülwasser anzuschließen. Ferner kann auf den Einsatz von Rückspülluft verzichtet werden, sofern keine Auflockerung der Aktivkohle erwünscht ist. Alternativ besteht die Möglichkeit, die Rückspülung nur mit Luft durchzuführen. Die Synchronisation der Rückspülung des stromauf gelegenen Adsorbers auf die Rückspülung des Biofilters kann eine starre, durch eine Zeitspanne bestimmte Kopplung sein. Sodann kann auf die TOC-Meßstellen 106 und 206 sowie auf die Differenzdruck-Meßeinrichtungen 114 und 214 verzichtet werden. Flexibler gestaltet sich der Betrieb, wenn lediglich die Reihenfolge der Rückspülvorgänge beibehalten wird. Der Aktivkohleaustausch der beiden Adsorber kann in die Rückspül-Zyklen eingebunden werden. Ein Austausch der Aktivkohle des Biofilters ist nicht erforderlich.

Abweichend von der beschriebenen Anlage besteht die Möglichkeit, die Rückspülung des Biofilters und/oder des stromaufgelegenen Adsorbers nur in Abhängigkeit von der Laufzeit oder nur in Abhängigkeit vom Aufbau des jeweiligen Druckabfalls durchzuführen. Allerdings hat sich die TOC-Messung als sehr zuverlässige Steuerung erwiesen. Die mechanische Reinigung der Adsorber wird, wie erwähnt, vorzugsweise erst mit Luft und anschließend mit Wasser durchgeführt. Eine reine Luft- oder Wasser-Rückspülung ist, wie ebenfalls bereits erwähnt, gleichermaßen möglich.

## Patentansprüche

1. Verfahren zum Reinigen von Rohwasser, welches mit biologisch und adsorptiv entfernbaren Substanzen, vor allem mit gelösten organischen Kohlenstoffverbindungen, belastet ist, insbesondere zum Vorreinigen von chlorfreim Trinkwasser als Vorstufe zum Erzeugen von vollentsalztem Reinstwasser, wobei
- die Reinigung dreistufig durchgeführt wird,
- die stromauf gelegene Reinigungsstufe überwiegend biologisch als Biofilter betrieben wird und die nachfolgenden Reinigungsstufen überwiegend adsorptiv als Adsorber betrieben werden,
- der Biofilter durch Rückspülung gereinigt wird, wobei die Rückspülperioden in Abhängigkeit von dem zwischen dem Biofilter und dem stromauf gelegenen Adsorber erfaßten TOC und/oder in Abhängigkeit von der Laufzeit und/oder in Abhängigkeit vom Druckverlust über dem Biofilter eingeleitet werden, und
- der stromauf gelegene Adsorber durch Rückspülung gereinigt und sodann im Wechsel mit dem anderen Adsorber in die stromab gelegene Position geschaltet wird.

2. Verfahren nach Anspruch 1, **dadurch gekennzeichnet, daß** die Rückspülung des Biofilters mit der Rückspülung des stromauf gelegenen Adsorbers synchronisiert wird.

3. Verfahren nach Anspruch 1 oder 2, **dadurch gekennzeichnet, daß** die Rückspülperioden des stromauf gelegenen Adsorbers in Abhängigkeit von dem zwischen diesem und dem stromab gelegenen Adsorber erfaßten TOC eingeleitet werden.

4. Verfahren nach Anspruch 3, **dadurch gekennzeichnet, daß** das Einleiten der Rückspülperioden zusätzlich oder alternativ in Abhängigkeit von dem über dem stromauf gelegenen Adsorber erfaßten Druckverlust erfolgt.

5. Verfahren nach einem der Ansprüche 1 bis 4, **dadurch gekennzeichnet, daß** jede Rückspülperiode eine Absenkung des Wasserstandes im Biofilter bzw. im stromauf gelegenen Adsorber und sodann eine Rückspülung mit Luft und/oder mit Wasser umfaßt.

6. Verfahren nach einem der Ansprüche 1 bis 5, **dadurch gekennzeichnet, daß** während wasserentnahmefreier Zeiten der Biofilter vom stromauf gelegenen Adsorber getrennt wird und die beiden Adsorber stillgesetzt werden.

7. Verfahren nach Anspruch 6, **dadurch gekennzeichnet, daß** der vom stromauf gelegenen Adsorber getrennte Biofilter mit vermindertem Durchsatz betrieben wird.

8. Vorrichtung zum Durchführen des Verfahrens nach einem der Ansprüche 1 bis 7, nämlich zum Reinigen von Rohwasser, welches mit biologisch und adsorptiv entfernbaren Substanzen, vor allem mit gelösten organischen Kohlenstoffverbindungen, belastet ist, insbesondere zum Vorreinigen von chlorfreiem Trinkwasser als Vorstufe zum Erzeugen von vollentsalztem Reinstwasser, wobei die Vorrichtung folgende Merkmale aufweist:
- eine Zulaufleitung (4) für Rohwasser,
- eine Ablaufleitung (5) für Reinwasser,
- einen Biofilter (1), dessen Einlaß an die Zulaufleitung (4) für Rohwasser angeschlossen ist,
- einen ersten und einen zweiten Adsorber (2,3), deren Einlässe an die Zulaufleitung (4) für Rohwasser und an den Auslaß des Biofilters (1) und deren Auslässe an die Ablaufleitung (5) für Reinwasser anschließbar sind, wobei ferner der Auslaß des ersten Adsorbers (2) an den Einlaß des zweiten Adsorbers (3) und der Auslaß des zweiten Adsorbers (3) an den Einlaß des ersten Adsorbers (2) anschließbar ist,
- eine Zu- sowie eine Ablaufleitung (7,8) für Rückspülwasser und/oder eine Zuführleitung (9) für Rückspülluft, wobei die Leitungen (7-9) an den Biofilter (1) sowie an jeden der beiden Adsorber (2,3) anschließbar sind, und
- eine Steuereinrichtung zum Betätigen der dem Biofilter (1) und jedem der beiden Adsorber (2,3) zugeordneten Ventile, wobei die Steuereinrichtung mit einer TOC-Meßstelle (6) am Auslaß des Biofilters (1) und/oder mit einer Dursatz-Meßeinrichtung und/oder mit einer Differenzdruck-Meßeinrichtung (14) für den Biofilter (1) verbunden ist.

9. Vorrichtung nach Anspruch 8, **dadurch gekennzeichnet, daß** am Auslaß jedes der beiden Adsorber (2,3) eine mit der Steuereinrichtung verbundene TOC-Meßstelle (106, 206) vorgesehen ist.

10. Vorrichtung nach Anspruch 8 oder 9, **dadurch gekennzeichnet, daß** jeder der beiden Adsorber (2,3) mit einer an die Steuereinrichtung angeschlossenen Differenzdruck-Meßeinrichtung (114, 214) versehen ist.

11. Vorrichtung nach einem der Ansprüche 8 bis 10, **dadurch gekennzeichnet, daß** der Auslaß des Biofilters (1) an eine Entsorgungsleitung (18) anschließbar ist.

12. Vorrichtung nach einem der Ansprüche 8 bis 11, **gekennzeichnet durch** eine an die Ablaufleitung (5) für Reinwasser angeschlossene Rezirkulationsleitung (19), die an den Einlaß jedes der beiden Adsorber (2,3) anschließbar ist.

## Claims

1. Method of cleaning untreated water, which is loaded with biologically and adsorptively removable substances, primarily with dissolved organic carbon compounds, particularly for precleaning chlorine-free drinking water as a preliminary step in production of fully desalinated highly pure water, wherein
- the cleaning is carried out in three stages,
- the cleaning stage disposed upstream is operated predominantly biologically as a biofilter and the succeeding cleaning stages are operated predominantly adsorptively as adsorbers,
- the biofilter is cleaned by back-flushing, wherein the back-flushing periods are initiated in dependence on the total organic carbon detected between the biofilter and the adsorber disposed upstream and/or in dependence on the transit time and/or in dependence on the pressure loss across the biofilter, and
- the adsorber disposed upstream is cleaned by back-flushing and then is connected in alternation with the other adsorber in the position disposed downstream.

2. Method according to claim 1, **characterised in that** the back-flushing of the biofilter is synchronised with the back-flushing of the adsorber disposed upstream.

3. Method according to claim 1 or 2, **characterised in that** the back-flushing periods of the adsorber disposed upstream are initiated in dependence on the total organic carbon detected between this and the adsorber disposed downstream.

4. Method according to claim 3, **characterised in that** the initiation of the back-flushing periods is carried out additionally or alternatively in dependence on the pressure loss detected across the adsorber disposed upstream.

5. Method according to one of claims 1 to 4, **characterised in that** each back-flushing period comprises a lowering of the water state in the biofilter or in the adsorber disposed upstream and then a back-flushing with air and/or with water.

6. Method according to one of claims 1 to 5, **characterised in that** during water-removal-free times the biofilter is separated from the adsorber disposed upstream and the two adsorbers are stopped.

7. Method according to claim 6, **characterised in that** the biofilter separated from the adsorber disposed upstream is operated with reduced throughput.

8. Device for carrying out the method according to one of claims 1 to 7, namely for cleaning untreated water which is loaded with biologically and adsorptively removable substances, primarily with dissolved carbon compounds, particularly for precleaning chlorine-free drinking water as a preliminary stage for producing fully desalinated highly-pure water, wherein the device has the following features:
- an inflow duct (4) for untreated water,
- an outflow duct (5) for clean water,
- a biofilter (1), the inlet of which is connected to the inflow duct (4) for untreated water,
- a first and a second adsorber (2, 3) the inlets of which are connectible with the inflow duct (4) for untreated water and with the outlet of the biofilter (1) and the outlets of which are connectible with the outflow duct (5) for clean water, wherein in addition the outlet of the first adsorber (2) is connectible with the inlet of the second adsorber (3) and the outlet of the second adsorber (3) is connectible with the inlet of the first adsorber (2),
- an inflow as well as an outflow duct (7, 8) for back-flushing water and/or a feed duct (9) for back-flushing air, wherein the ducts (7 to 9) are connectible with the biofilter (1) as well as with each of the two adsorbers (2, 3), and
- a control device for actuating the valves associated with the biofilter (1) and with each of the two adsorbers (2, 3), wherein the control device is connected with a total organic carbon measuring point (6) at the outlet of the biofilter (1) and/or with a throughput measuring device and/or with a pressure difference measuring device (14) for the biofilter (1).

9. Device according to claim 8, **characterised in that** a total organic carbon measuring point (106, 206) connected with the control device is provided at the outlet of each of the two adsorbers (2, 3).

10. Device according to claim 8 or 9, **characterised in that** each of the two adsorbers (2, 3) is provided with a pressure difference measuring device (114, 214) connected with the control device.

11. Device according to one of claims 8 to 10, **characterised in that** the outlet of the biofilter (1) is connected with a discharge duct (18).

12. Device according to one of claims t 8 to 11, **characterised by** a recirculation duct (19) which is connected with the outflow duct (5) for clean water and which is connectible with the inlet of each of the two adsorbers (2, 3).

## Revendications

1. Procédé d'épuration d'eau brute chargée de substances aptes à être retirées biologiquement et par adsorption, notamment de composés carbonés organiques dissous, notamment pour l'épuration préalable d'eau potable exempte de chlore comme étape préalable pour produire de l'eau pure entièrement dessalée, où
- l'épuration est exécutée en trois étages,
- l'étage d'épuration situé en amont est amené à fonctionner essentiellement biologiquement comme bio-filtre et les étages d'épuration suivants sont amenés à fonctionner essentiellement de manière adsorptive, comme adsorbant,
- le bio-filtre est nettoyé par rétrolavage, où les périodes de rétrolavage sont introduites en fonction du TOC saisi entre le bio-filtre et l'adsorbant situé en amont et/ou en fonction du temps de fonctionnement et/ou en fonction de la perte de pression au-dessus du bio-filtre, et
- l'adsorbant situé en amont est nettoyé par rétrolavage et est commuté ensuite en alternance avec l'autre adsorbant dans la position située en aval.

2. Procédé selon la revendication 1, **caractérisé en ce que** le rétrolavage du bio-filtre est synchronisé avec le rétrolavage de l'adsorbant situé en amont.

3. Procédé selon la revendication 1 ou 2, **caractérisé en ce que** les périodes de rétrolavage de l'adsorbant situé en amont sont introduites en fonction du TOC détecté entre celui-ci et l'adsorbant situé en aval.

4. Procédé selon la revendication 3, **caractérisé en ce que** l'introduction des périodes de rétrolavage a lieu additionnellement ou alternativement en fonction de la perte de pression détectée au-dessus de l'adsorbant situé en amont.

5. Procédé selon l'une des revendications 1 à 4, **caractérisé en ce que** chaque période de rétrolavage comprend un abaissement du niveau d'eau dans le bio-filtre respectivement dans l'adsorbant situé en amont et ensuite un rétrolavage avec de l'air et/ou avec de l'eau.

6. Procédé selon l'une des revendications 1 à 5, **caractérisé en ce que** pendant des durées exemptes de prélèvement d'eau, le bio-filtre est séparé de l'adsorbant situé en amont, et les deux adsorbants sont mis hors service.

7. Procédé selon la revendication 6, **caractérisé en ce que** le bio-filtre séparé de l'adsorbant situé en amont est amené à fonctionner avec un débit réduit.

8. Dispositif pour la mise en oeuvre du procédé selon l'une des revendications 1 à 7, à savoir pour l'épuration d'eau brute, qui est chargée de substances pouvant être supprimées biologiquement et par adsorption, notamment de composés carbonés organiques dissous, en particulier pour l'épuration préalable d'eau potable exempte de chlore comme étape préliminaire pour produire de l'eau pure entièrement dessalée, où le dispositif présente les caractéristiques suivantes :
- un conduit d'amenée (4) pour l'eau brute,
- un conduit d'évacuation (5) pour l'eau pure,
- un bio-filtre (1) dont l'entrée est raccordée au conduit d'amenée (4) de l'eau brute,
- un premier et un second adsorbant (2, 3) dont les entrées peuvent être raccordées au conduit d'amenée (4) de l'eau brute et à la sortie du bio-filtre (1) et dont les sorties peuvent être raccordées au conduit d'évacuation (5) pour l'eau pure, où en outre la sortie du premier adsorbant (2) peut être reliée à l'entrée du second adsorbant (3), et la sortie du second adsorbant (3) à l'entrée du premier adsorbant (2),
- des conduits d'amenée et d'évacuation (7, 8) pour de l'eau de rétrolavage et/ou un conduit d'amenée (9) pour de l'air de rétrolavage, où les conduits (7-9) peuvent être raccordés au bio-filtre (1) et à chacun des deux adsorbants (2, 3), et
- une installation de commande pour l'actionnement des vannes associées au bio-filtre (1) et à chacun des deux adsorbants (2, 3), où l'installation de commande est reliée à un emplacement de mesure du TOC (6) à la sortie du bio-filtre (1) et/ou à une installation de mesure de débit et/ou à une installation de mesure de la pression différentielle (14) pour le bio-filtre (1).

9. Dispositif selon la revendication 8, **caractérisé en ce qu'**il est prévu à la sortie de chacun des deux adsorbants (2, 3) un emplacement de mesure du TOC (106, 206) relié à l'installation de commande.

10. Dispositif selon la revendication 8 ou 9, **caractérisé en ce que** chacun des deux adsorbants (2, 3) est pourvu d'une installation de mesure de la pression différentielle (114, 214) reliée à l'installation de commande.

11. Dispositif selon l'une des revendications 8 à 10, **caractérisé en ce que** la sortie du bio-filtre (1) peut être raccordée à un conduit d'élimination des déchets (18).

12. Dispositif selon l'une des revendications 8 à 11, **caractérisé par** un conduit de recirculation (19) raccordé au conduit d'évacuation (5) de l'eau pure, qui peut être raccordé à l'entrée de chacun des deux adsorbants (2, 3).
